# EUROPEAN PATENT APPLICATION

(11) **EP 2 472 401 A1**
(43) Date of publication of application: **04.07.2012**
(21) Application number: 10821564.1
(22) Date of filing: 19.07.2010
(51) Int. Cl.: G06F 9/54, G06K 19/07

(54) **SYSTEM AND METHOD FOR COMMUNICATING BETWEEN INTELLIGENT MEMORY CARD AND EXTERNAL HOST APPARATUS**

(30) Priority: 10.10.2009 CN 200910110620
(71) Applicant: Shenzhen Netcom Electronics Co., Ltd., Shenzhen, Guangdong 518057 (CN)
(72) Inventor: LI, Zhixiong, Shenzhen Guangdong 518057 (CN); YANG, Tianzhu, Shenzhen Guangdong 518057 (CN)
(74) Representative: Michalski Hüttermann & Partner
(86) International application number: PCT/CN2010/075238
(87) International publication number: WO 2011/041955

(57) **Abstract**

The present disclosure relates generally to communication technical filed, and a system and method for communicating between a smart memory card and an external host apparatus are disclosed. The system includes: the smart memory card, including a SDK middleware programmed in an application thereof; and the external host apparatus utilizing the smart memory card, which installs an application programming the SDK middleware; wherein an operating system of the external host apparatus is capable of accessing the smart memory card via the SDK middleware. A stable high-level application environment is provided, and when a user changes the host apparatus, the smart memory card can be used directly without purchasing and installing a new application for the smart memory card. Thus the cost for developing and maintaining the new application can be saved.

## Description

### FIELD OF THE INVENTION

The present disclosure relates generally to communication technical filed, and more particularly, to smart memory card, a system and method for communicating between the smart memory card and an external host apparatus.

### BACKGROUND OF THE INVENTION

The smart memory card is a memory card imbedded with a contactless smart card. When the smart memory card is used with an external host apparatus, such as a mobile phone, a PDA (Personal Digital Assistant), or other portable devices, those portable devices will become contactless devices.

In using a conventional smart memory card, it should normally develop different applications of smart memory card for different external host apparatuses with different hardware circuits and operating systems. Therefore, one applications of smart memory card can only used in one operating system of a specific host apparatus. For an application development company, it will cost a lot to develop and maintain new applications. On the other hand, if a user wants to change his NOKIA mobile phone to a Sony Ericsson mobile phone, or if the user not only wants to use a smart memory card on the phone, but also wants to use it on a PDA, he has to install two applications on both host apparatuses because those host apparatuses have different hardware circuits and operating systems, correspondingly.

As described above, because a top-level application corresponding to the smart memory card lacks compatibility, it will be burdensome for the user if the user wants to use the smart memory card in different host apparatuses.

Therefore, there is room for improvement within the art.

### SUMMARY OF THE INVENTION

This disclosure relates to a method and a system for communicating between a smart memory card and an external host apparatus to solve the problem that when the conventional smart memory card is used with the external host apparatus, different applications of the smart memory card should be developed corresponding to different hardware circuits and different operating systems.

In an embodiment, a system for communicating between a smart memory card and an external host apparatus includes: the smart memory card, comprising a SDK ( Software Development Kit ) middleware programmed in an application thereof; and the external host apparatus utilizing the smart memory card, which installs an application programming the SDK middleware; wherein the operating system of the external host apparatus is capable of accessing the smart memory card via the SDK middleware.

When changing the external host apparatus to a new external host apparatus, an application which is capable of communicating with the SDK middleware of the smart memory card is installed in the new external host apparatus and the SDK middleware is updated.

When changing the external host apparatus to a new external host apparatus, the new external host apparatus utilizes the same application to access the smart memory card, if the hardware circuit and the operating system of the new external host apparatus are on the support list of the SDK middleware. The SDK middleware is updated, if the hardware circuit and the operating system of the new external host apparatus are not on the support list of the SDK middleware.

The SDK middleware provides a standard programming interface and protocol for different operating systems and hardware platforms of the external host apparatus.

The external host apparatus is a mobile communication terminal.

In another embodiment, a method for communicating between the smart memory card and the external host apparatus includes: accessing the smart memory card via the SDK middleware by the operating system of the external host apparatus.

When changing the external host apparatus to a new external host apparatus, the method further includes: installing an application which is capable of communicating with the SDK middleware of the smart memory card in the new external host apparatus, and updating the SDK middleware.

When changing the external host apparatus to a new external host apparatus, the method further includes: the new external host apparatus utilizes the same application to access the smart memory card, if the hardware circuit and the operating system of the new external host apparatus are on the support list of the SDK middleware. The SDK middleware is updated, if the hardware circuit and the operating system of the new external host apparatus are not on the support list of the SDK middleware.

The SDK middleware provides a standard programming interface and protocol for different operating systems and hardware platforms of the external host apparatus.

The external host apparatus is a mobile communication terminal.

In yet another embodiment, a smart memory card includes: a SDK middleware programmed in an application of the smart memory card; wherein an operating system of a external host apparatus is capable of accessing the smart memory card via the SDK middleware.

The SDK middleware includes a standard programming interface and protocol for different operating systems and hardware platforms of the external host apparatus.

By introducing the SDK middleware between the application of the smart memory card and the operating system of the external host apparatus, some features can be obtained as follows.

(1) A stable high-level application environment is provided, and one application can be used across different hardware platforms of the external host apparatus. Take mobile platform for example, there is no need to develop a plurality of applications of the same version (function) for different host apparatuses. No matter how the hardware circuit and operating system of the host apparatus update, as long as updates the SDK middleware and keeps the interface of the middleware unchanged, the application can be used directly without modification, thus the cost for developing and maintaining the application can be saved.

(2) The user need not consider the portability of the smart memory card and the application thereof, and he can use the smart memory card on any external host apparatus freely.

### BRIEF DESCRIPTION OF THE DRAWINGS

The components in the drawings are not necessarily drawn to scale, the emphasis instead being placed upon clearly illustrating the principles of the present disclosure. Moreover, in the drawings, like reference numerals designate corresponding parts throughout the views.

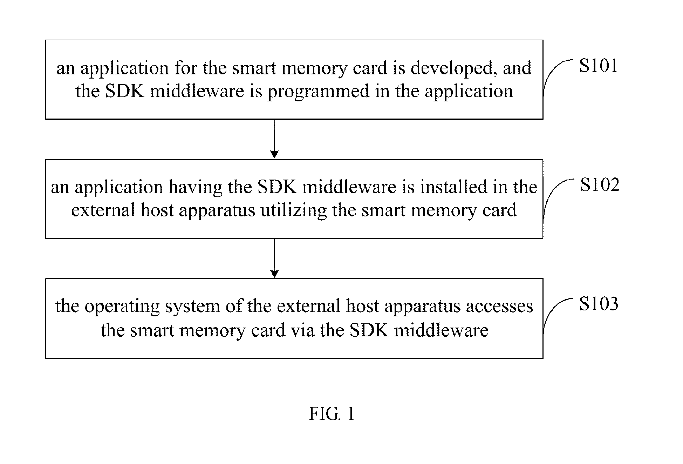

FIG 1 is a flowchart of an embodiment of a method for communicating between the smart memory card and the external host apparatus.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In an embodiment of the present disclosure, a software development kit (SDK) is introduced between an application of a smart memory card and an operating system of an external host apparatus, such that a stable high-level application environment is provided for users. When a user changes the host apparatus, the smart memory card can be used directly without purchasing and installing a new application for the smart memory card. No matter how the hardware and the operating system of the host apparatus change, as long as they are on a support list of the SDK middleware (updating the support list if they are not), there is no need for a company to develop and maintain a new application, thus the cost for developing and maintaining the new application can be saved, the user is also use conveniently without installing the new application.

In an embodiment of the present disclosure, a system is provided for communicating between a smart memory card and an external host apparatus. The system includes a smart memory card and an external host apparatus utilizing the smart memory card. The smart memory card includes a SDK middleware programmed in an application of the smart memory card. The external host apparatus installs an application programming the SDK middleware. An operating system of the external host apparatus is capable of accessing the smart memory card via the SDK middleware.

In this embodiment, when changing the external host apparatus to a new external host apparatus, an application which is capable of communicating with the SDK middleware of the smart memory card is installed in the new external host apparatus and the SDK middleware is updated.

When changing the external host apparatus to a new external host apparatus, the new external host apparatus utilizes the same application to access the smart memory card, if the hardware circuit and the operating system of the new external host apparatus are on the support list of the SDK middleware. The SDK middleware is updated, if the hardware circuit and the operating system of the new external host apparatus are not on the support list of the SDK middleware.

The SDK middleware provides a standard programming interface and protocol for different operating systems and hardware platforms of the external host apparatus.

The external host apparatus is a mobile communication terminal.

Referring to FIG 1, an embodiment of a method for communicating between the smart memory card and the external host apparatus is disclosed as follows.

In step S101, an application for the smart memory card is developed, and the SDK middleware is programmed in the application.

In step S102, an application having the SDK middleware is installed in the external host apparatus utilizing the smart memory card.

In step S103, the operating system of the external host apparatus accesses the smart memory card via the SDK middleware.

In this embodiment, when changing the external host apparatus to a new external host apparatus, an application which is capable of communicating with the SDK middleware of the smart memory card is installed in the new external host apparatus and the SDK middleware is updated.

When changing the external host apparatus to a new external host apparatus, the new external host apparatus utilizes the same application to access the smart memory card, if the hardware circuit and the operating system of the new external host apparatus are on the support list of the SDK middleware. The SDK middleware is updated, if the hardware circuit and the operating system of the new external host apparatus are not on the support list of the SDK middleware.

The SDK middleware provides a standard programming interface and protocol, for different operating systems and hardware platforms of the external host apparatus.

The external host apparatus may be a mobile communication terminal, for example, a mobile phone.

The smart memory card is a memory card imbedded with a smart IC, which can functions as a smart card, as well as a memory card.

To facilitate an understanding, a specific example is provided to describe a method for communicating between the smart memory card and the external host apparatus.

When the user wants to change the external host apparatus, for example, the user wants to change his NOKIA mobile phone to a Sony Ericsson mobile phone or a PDA, he can simply install an application for the smart memory card in the Sony Ericsson mobile phone or the PDA, and update the SDK middleware between an operating system of the Sony Ericsson mobile phone or the PDA and the application for the smart memory card. The SDK middleware is compatible with various operating systems and hardware platforms of the external host apparatus, thus it is not need to be updated. The smart memory card can then be used across the different external host apparatuses.

In summary, by introducing the SDK middleware between the application of the smart memory card and the operating system of the external host apparatus, some features can be obtained as follows.

(1) A stable high-level application environment is provided, and one application can be used across different hardware platforms of the external host apparatus. Take mobile platform for example, there is no need to develop a plurality of applications of the same version (function) for different host apparatuses. No matter how the hardware circuit and operating system of the host apparatus update, as long as updates the SDK middleware and keeps the interface of the middleware unchanged, the application can be used directly without modification, thus the cost for developing and maintaining the application can be saved.

(2) The user need not consider the portability of the smart memory card and the application thereof, and he can use the smart memory card on any external host apparatus freely.

Although the invention has been described in language specific to structural features and/or methodological acts, it is to be understood that the invention defined in the appended claims is not necessarily limited to the specific features or acts described. Rather, the specific features and acts are disclosed as sample forms of implementing the claimed invention.

## Claims

1. A system for communicating between a smart memory card and an external host apparatus, comprising:
the smart memory card, comprising a SDK middleware programmed in an application thereof; and
the external host apparatus utilizing the smart memory card, and installing an application programming the SDK middleware;
wherein an operating system of the external host apparatus is capable of accessing the smart memory card via the SDK middleware.

2. The system according to claim 1, wherein when changing the external host apparatus to a new external host apparatus, an application which is capable of communicating with the SDK middleware of the smart memory card is installed in the new external host apparatus and the SDK middleware is updated.

3. The system according to claim 1, wherein when changing the external host apparatus to a new external host apparatus, the new external host apparatus utilizes the same application to access the smart memory card, if the hardware circuit and the operating system of the new external host apparatus are on the support list of the SDK middleware; the SDK middleware is updated, if the hardware circuit and the operating system of the new external host apparatus are not on the support list of the SDK middleware.

4. The system according to claim 1, wherein the SDK middleware provides a standard programming interface and protocol for different operating systems and hardware platforms of the external host apparatus.

5. The system according to claim 1, wherein the external host apparatus is a mobile communication terminal.

6. A method for communicating between the smart memory card and the external host apparatus of the claim 1, comprising:
accessing the smart memory card via the SDK middleware by the operating system of the external host apparatus.

7. The method according to claim 6, wherein when changing the external host apparatus to a new external host apparatus, further comprising:
installing an application which is capable of communicating with the SDK middleware of the smart memory card in the new external host apparatus, and
updating the SDK middleware.

8. The method according to claim 6, wherein when changing the external host apparatus to a new external host apparatus, further comprising:
utilizing the same application to access the smart memory card, if the hardware circuit and the operating system of the new external host apparatus are on the support list of the SDK middleware;
updating the SDK middleware, if the hardware circuit and the operating system of the new external host apparatus are not on a support list of the SDK middleware.

9. The method according to claim 6, wherein the SDK middleware provides a standard programming interface and protocol for different operating systems and hardware platforms of the external host apparatus.

10. The method according to claim 6, wherein the external host apparatus is a mobile communication terminal.

11. A smart memory card, comprising:
a SDK middleware programmed in an application of the smart memory card;
wherein an operating system of a external host apparatus is capable of accessing the smart memory card via the SDK middleware.

12. The smart memory card according to claim 11, wherein the SDK middleware provides a standard programming interface and protocol for different operating systems and hardware platforms of the external host apparatus.
